# EUROPEAN PATENT APPLICATION

(11) **EP 2 148 531 A1**
(43) Date of publication of application: **27.01.2010**
(21) Application number: 09174481.3
(22) Date of filing: 14.12.2006
(51) Int. Cl.: H04W 4/02

(54) **Transmission of a handheld electronic device's status information to another electronic device and determining a form of communication between the devices based on the status information**

(62) Divisional of application: 06126173.1
(71) Applicant: Research in Motion, Waterloo, Ontario N2L 3W8 (CA)
(72) Inventor: Wisebourt, Shaul, Waterloo Ontario N2V 2H8 (CA)
(74) Representative: Fennell, Gareth Charles

(57) **Abstract**

A method for transmitting a status of a handheld electronic device to another electronic device, that method includes initiating on the handheld electronic device a routine that employs a network to determine the status, transmitting the status from the handheld electronic device to one of the one or more networks, and transmitting the status from the one of the one or more networks to the another electronic device. Once the other electronic device receives the status of the handheld electronic device, the electronic device can determine a form of communication for communicating with the handheld electronic device based on the handheld electronic device's status.

## Description

### BACKGROUND

### Field

The disclosed and claimed concept relates generally to handheld electronic devices. More particularly, the disclosed and claimed concept relates to a method for communicating information from a handheld electronic device to another electronic device.

### Description of the Related Art

Numerous types of handheld electronic devices are known. Examples of such handheld electronic devices include, for instance, personal data assistants (PDAs), handheld computers, two-way pagers, cellular telephones, and the like. Many handheld electronic devices also feature wireless communication capability, although many such handheld devices are stand-alone devices that are functional without communication with other devices. Moreover, some handheld electronic devices also include features such as electronic mail (e-mail) and/or instant messaging capabilities, Bluetooth, and a Global Positioning System (GPS).

If a handheld electronic device is equipped with voice as well as e-mail and/or instant messaging capabilities, then a user of the handheld electronic device has a variety of means to communicate with another individual. If the other individual with whom the user wants to communicate also uses a handheld electronic device equipped with similar features, then the user must decide whether to place a voice call to the other individual, send an e-mail, or initiate an instant messaging session. The other individual, however, may not be available for a voice call or an instant messaging session in certain circumstances. Accordingly, there is a need for a method of remotely ascertaining a status of the other individual's handheld electronic device.

### BRIEF DESCRIPTION OF THE DRAWINGS

A full understanding of the disclosed and claimed concept can be gained from the following description when read in conjunction with the accompanying drawings in which:

FIG. 1 is a top plan view of a handheld electronic device in accordance with the disclosed and claimed concept;

FIG. 2 is a schematic depiction of the handheld electronic device of FIG. 1;

FIG. 3 is a flow chart depicting one embodiment of the disclosed and claimed concept;

FIG. 4 depicts a handheld electronic device and another handheld electronic device that is in communication with a network; and

FIG. 5 depicts a handheld electronic device and another handheld electronic device that is in communication with a network.

### DESCRIPTION

As used herein, the phrase "Access Point", "Base Station", or "Cellular Towers" and variations thereof shall refer broadly to a device that can receive data from a network and that can wirelessly transmit the data for subsequent receipt by one or more devices.

As used herein, the phrase "status" and variations shall refer broadly to a handheld electronic device's current geographic location and/or current time where the handheld electronic device is currently located.

As used herein, the phrase "a number of" or variations thereof means one or an integer greater than one.

Directional phrases used herein, such as, for example, upper, lower, left, right, vertical, horizontal, top, bottom, above, beneath, clockwise, counterclockwise and derivatives thereof, relate to the orientation of the elements shown in the drawings and are not limiting upon the claims unless expressly recited therein.

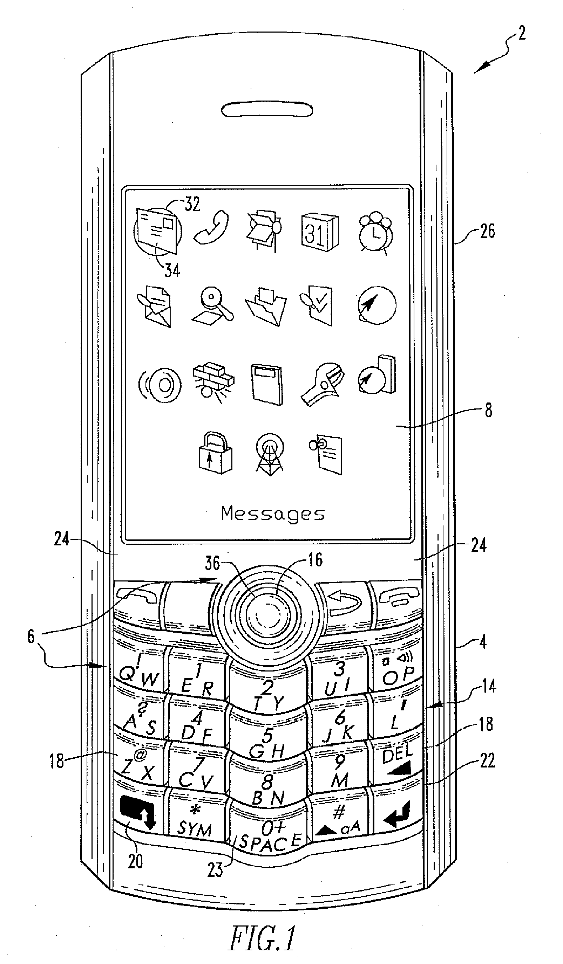

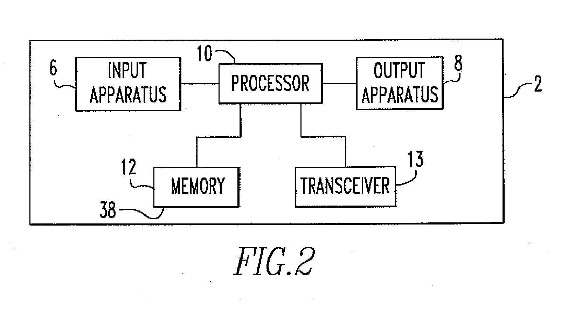

One embodiment of a handheld electronic device 2 in accordance with the disclosed concept is depicted generally in FIG. 1. The handheld electronic device 2 of FIG. 1 is depicted schematically in FIG. 2. The handheld electronic device 2 includes a housing 4 upon which are disposed a processor unit that includes an input apparatus 6, an output apparatus 8, a processor 10, a memory 12, and a wireless transceiver 13. The processor 10 may be, for instance, and without limitation, a microprocessor (µP) and is responsive to inputs from the input apparatus 6 and provides output signals to the output apparatus 8. The processor 10 also interfaces with the memory 12 which, as will be discussed in greater detail below, contains one or more routines that are used to implement the disclosed concept. The processor 10 and the memory 12 together form a processor apparatus.

Referring to FIG. 1, the input apparatus 6 includes a keypad 14 and a navigational input member 16. The keypad 14 is in the exemplary form of a reduced QWERTY keyboard including a plurality of keys 18 that serve as input members. Many of the keys 18 each have a plurality of characters assigned thereto. The keypad 14 also includes an <ALT> key 20, an <ENTER> key 22, and a <SPACE> key 23. It is noted, however, that the keypad 14 may be of other configurations, such as an AZERTY keyboard, a QWERTY keyboard, a QWERTZ keyboard or another keyboard arrangement, whether or not reduced, and whether presently known or unknown.

The keys 18 are located on a front face 24 of the housing 4, and the navigational input member 16, which is in the exemplary form a trackball 36, is disposed on the front face 24 of the housing 4 as well. The trackball 36 is rotatable in various directions thereby allowing for the navigation of the cursor 32, which is displayed on the output apparatus 8, in various directions including up, down, left, right, and any combination thereof. Moreover, the trackball 36 can also be depressed to provide a selection or other input based upon the current location of the cursor 32. Accordingly, rotation of the trackball 36 can navigate the cursor 32 over a particular program icon 34, while depression of the trackball 36 can launch the program. It should be noted that a trackwheel (not shown), which can be disposed on a side 26 of the housing 4, can be used in lieu of the trackball 36. Similar to the trackball, the trackwheel can serve as input member since the trackwheel is capable of being rotated in a clockwise or a counterclockwise direction as well as being depressed. Rotation of the trackwheel can provide a navigation or other input, while depression of the trackwheel can provide a selection or other input. For example, if a cursor 32 is located over a given program icon 34, that program will be launched when the trackwheel is depressed.

Referring to FIG. 2, the memory 12 can be any of a variety of types of internal and/or external storage media such as, without limitation, RAM, ROM, EPROM(s), EEPROM(s), and the like that provide a storage register for data storage such as in the fashion of an internal storage area of a computer, and can be volatile memory or nonvolatile memory. As can be seen from FIG. 2, the memory 12 is in electronic communication with the processor 10. The memory 12 additionally can include one or more routines depicted generally with the numeral 38 for the processing of data. The routines 38 can be in any of a variety of forms such as, without limitation, software, firmware, and the like. As will be explained in greater detail below, the routines 38 include one or more routines that can be executed to perform an improved method in accordance with the disclosed concept as well as other routines that are utilized by the handheld electronic device 2.

As stated above, a user of a handheld electronic device that supports voice, e-mail, and instant messaging has three distinct ways to communicate with another individual whose handheld electronic device supports the same features. There may be times, however, when the other individual might not be available for a voice call or an instant message. Accordingly, the disclosed concept addresses this need and others by providing a method in which the status of a handheld electronic device is transmitted to another electronic device (hereinafter, referred to as the second handheld electronic device) thereby allowing a user of the second handheld electronic device to determine which mode of communication is most appropriate. It should be noted, however, that the second handheld electronic device that is described hereafter can be substituted with any type of electronic device, such as a computer or other device, which has a need to obtain the status of the handheld electronic device.

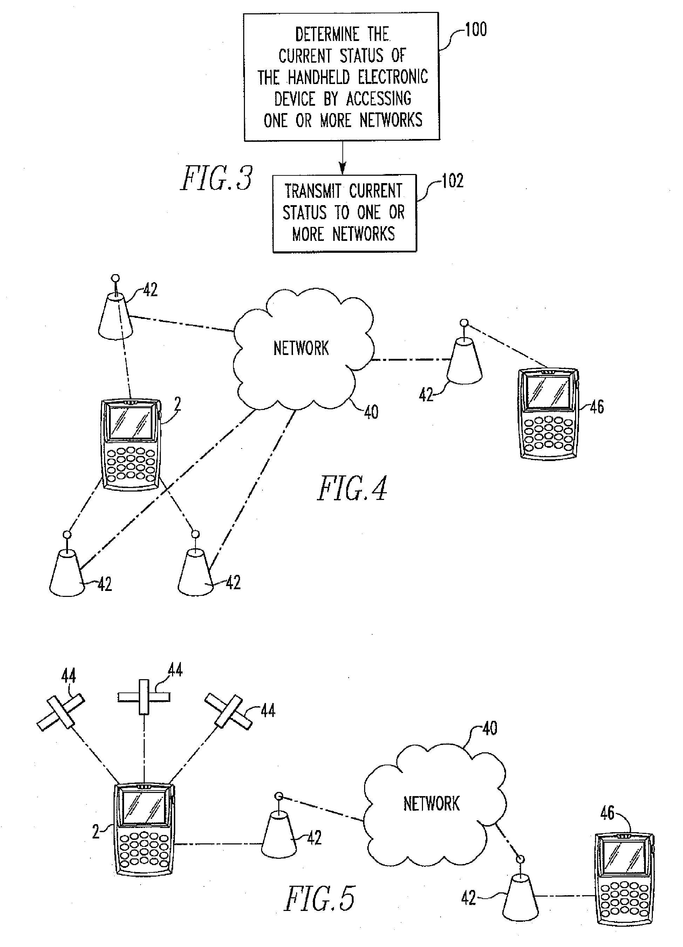

In order to enable the second handheld electronic device to obtain the status of the handheld electronic device 2, one or more of the routines 38 are used by the handheld electronic device 2 to determine its status and to transmit the status to one or more networks for subsequent transmission to the second handheld electronic device. A flowchart depicting one embodiment of a routine 38 is depicted in FIG. 3,

Referring to FIG. 3, when executed, the routine 38 will first attempt to determine the current status of the handheld electronic device 2 at step 100. This can be accomplished by accessing one or more networks with which the handheld electronic device 2 is currently in communication. For example, referring to FIG. 4, the handheld electronic device 2, once registered with a wireless network 40 (hereinafter, referred to as the network), can use one or more of the network's 40 cellular towers 42 to triangulate its geographic location. Alternatively, referring to FIG. 5, if the handheld electronic device 2 is equipped with a Global Positioning System, then the handheld electronic device 2 can access one or more GPS satellites 44 to determine its location. It should be noted, however, that other methods for determining the location of the handheld electronic device 2 may be employed and use of a number of cellular towers 42 and/or a Global Positioning System is not meant to be limiting on the disclosed concept. Continuing with FIG. 3, after the handheld electronic device 2 has determined its status the handheld electronic device will transmit, as at step 102, the status information to the network 40 by transmitting the status information to one or more cellular towers 42 that are in electronic communication with the network 40.

Referring to FIGS. 4 and 5, once the handheld electronic device 2 has transmitted its status information to a network 40, a second handheld electronic device 46 can then obtain the status of the handheld electronic device 2 by accessing the network 40 and having the network 40 transmit the status of the handheld electronic device 2 to the second handheld electronic device 46.

The method of initiating transfer of the handheld electronic device's 2 status information from the wireless network 40 to the second handheld electronic device 46 can be achieved through a variety of ways. For example, a user of the second handheld electronic device 46 can select the handheld electronic device 2 from a contact list that is stored in memory 12 on the second handheld electronic device 46. Responsive to the selection of the handheld electronic device 2 from the contact list, the second handheld electronic device 46 transmits a request to the network 40 that instructs the network 40 to transmit the status information of the handheld electronic device 2 to the second handheld electronic device 46. Another example would include the second handheld electronic device 46 automatically selecting, without user interaction, the handheld electronic device 2 from the contact list and requesting the status information of the handheld electronic device 2 from the network 40.

A number of security protocols can be implemented in order to prevent unauthorized viewing of the status information of the handheld electronic device 2. For instance, prior to transmitting the status information of the handheld electronic device 2, the network 40 can determine whether the second handheld electronic device 46 is preauthorized to view the status information of the handheld electronic device 2. Alternatively, assuming that the status information of the handheld electronic device 2 is encrypted, the second handheld electronic device 46, if authorized, can have a decryption key that is used to decrypt the status information thereby allowing the user of the second handheld electronic device 46 to view the status information of handheld electronic device 2.

Once the status information of the handheld electronic device 2 has been received by the second handheld electronic device 46, the user of the second handheld electronic device 46 can then utilize the status information in a variety of ways. For example, if the user of the second handheld electronic device 46 is trying to determine whether to place a voice call, an e-mail, or an instant message to the user of the handheld electronic device 2, then the status information relating to the local time in which the handheld electronic device 2 is located would be useful to the user of the second handheld electronic device 46 in evaluating which mode of communication should be used since the user of the handheld electronic device 2 might not be available for a voice call or an instant messaging session during particular hours of a day. Because the status of the handheld electronic device 2 was transmitted to the network 40, the network 40 can forward the status of the handheld electronic device 2, which can include the local time where the handheld electronic device 2 is located, to the second handheld electronic device 46 via the network's 40 cellular towers 42 thereby facilitating the user of the second handheld electronic device 46 in making a decision.

For example, if the handheld electronic device 2 determines that it is located in Beijing, China, the status information that is transmitted to the network 40 from the handheld electronic device 2 can include Beijing's local time in addition to data that shows that the handheld electronic device 2 is located in Beijing. When the second handheld electronic device 46 requests and receives the status information for the handheld electronic device 2 from the network 40, the second handheld electronic device 46 will not only know the handheld electronic device's 2 current local time but the second handheld electronic device 46 will also know that the handheld electronic device 2 is located in Beijing.

Even if the handheld electronic device's 2 status information only includes data with regards to its geographic location, the second handheld electronic device 46, by executing a routine stored in memory 12 on the second handheld electronic device 12, will still be able to determine the current local time of the handheld electronic device 2.

Moreover, events stored in a calendar program on the second handheld electronic device 46 can be updated based on the handheld electronic device's 2 status information. For example, if a meeting was originally scheduled for 10:00 am Central Standard Time (CST) but the local time where the handheld electronic device 2 is 10:00 am Eastern Standard Time (EST), then a prompt will be displayed on the second handheld electronic device 46 showing that the local time where the handheld electronic device 2 is located is 10:00 am. Accordingly, the user of the second handheld electronic device 46 can then decide whether to commence the meeting with the user of the handheld electronic device 2 or wait until a later time.

In another embodiment, the second handheld electronic device 46 can automatically recommend a communications means (e.g., e-mail and/or instant message) based on the status information of the handheld electronic device 2. For example, if it is determined that the local time where the handheld electronic device 2 is located is 3:00 am, then the second handheld electronic device 46, when instructed to communicate with the handheld electronic device 2, will recommend to the user that e-mail be used as the mode of communication. This recommendation, however, can be overruled by the user thereby allowing the user to send an instant message to the user of the handheld electronic device 2 if he or she wishes. In this particular embodiment, the second handheld electronic device 46 can be programmed with the hours when such a recommendation should be presented to the user. For instance, the second handheld electronic device 46 can be programmed to give the recommendation described above only if it is determined that the local time where the handheld electronic device 2 is located is between the hours of 12:00 am and 6:00 am. Alternatively, the second handheld electronic device 46 can be programmed to recommend sending an instant message to the handheld electronic device 2 between the hours of 9:00 am and 6:00 pm.

The accompanying figures and the description that follows set forth this disclosed and claimed concept in its preferred embodiments. It is, however, contemplated that persons generally familiar with handheld electronic devices will be able to apply the novel characteristics of the structures and methods illustrated and described herein in other contexts by modification of certain details. Accordingly, the figures and description are not to be taken as restrictive on the scope of this disclosed and claimed concept, but are to be understood as broad and general teachings.

One aspect of this disclosure provides a method for determining a form of communication between a handheld electronic device and another electronic device, said method comprising:
initiating on said handheld electronic device a routine that employs a network to determine a status of said handheld electronic device;
transmitting said status from said handheld electronic device to a number of networks;
transmitting said status from said number of networks to said another electronic device;
receiving said status from said number of networks on said another electronic device; and
responsive to receiving said status, determining a form of communication at said another electronic device based on said status.

Optionally, the method may further comprise responsive to receiving said status from said number of networks, displaying said status on said another electronic device.

Optionally, the method may further comprise selecting said handheld electronic device from a contact list stored on said another handheld electronic device, and responsive to said selecting, transmitting a request to said number of networks to initiate said transmitting of said status of said handheld electronic device to said network.

Optionally, the method may further comprise responsive to receiving said status from said number of networks, performing an updating operation on said another electronic device.

Optionally, the method may further comprise performing as said updating operation an updating of a calendar event stored on said another electronic device based on said status of said handheld electronic device.

Optionally, the status information may be encrypted, and the method further comprise decrypting said status information prior to said displaying.

Optionally, the method may further comprise determining as said form of communication a form of communication selected from the group consisting of e-mail, instant messaging, and a voice call.

Optionally, the method may further comprise determining whether said another handheld electronic device is authorized to receive said status prior to transmission of said status.

Optionally, the method may further comprise determining as said status a geographic location of said handheld electronic device.

Optionally, the method may further comprise determining as said status a time zone where said handheld electronic device is disposed.

Optionally, said network may comprise one or more wireless Access Points, and said method may further comprise transmitting a portion of said status from said handheld electronic device to said number of networks via said one or more Access Points.

Optionally, said network may comprise one or more wireless Access Points, and said method may further comprise transmitting a portion as said status from said number of networks to said another electronic device via said one or more Access Points.

Optionally, a portion of said determining a form of communication further may comprise recommending a form of communication.

Optionally, said another electronic device may be another handheld electronic device.

Another aspect of this disclosure provides a method for determining a form of communication between a handheld electronic device and another electronic device wherein a status of a handheld electronic device is transmitted to said electronic device via a number of networks, said method comprising:
receiving on said electronic device said status from said number of networks; and
responsive to receiving said status, determining at said electronic device a form of communication between said electronic device and said handheld electronic device based on said status.

Optionally, the method may further comprise determining as said status a geographic location of said handheld electronic device.

Optionally, the method may further comprise determining as said status a time zone where said handheld electronic device is disposed.

Optionally, the method may further comprise determining as said form of communication a form of communication selected from the group consisting of e-mail, instant messaging, and a voice call.

Optionally, said electronic device may be another handheld electronic device.

A further aspect of this disclosure provides a handheld electronic device comprising:
an input apparatus;
an output apparatus; and
a processor apparatus comprising a processor and a memory in electronic communication with one another, said processor apparatus having stored therein a number of routines which, when executed on said processor, cause said handheld electronic device to perform operations comprising:
   receiving from a number of networks a status of another handheld electronic device; and
   responsive to receiving said status, determining a form of communication between said handheld electronic device and said another handheld electronic device.

Optionally, said status is a geographic location of said another handheld electronic device.

Optionally, said status is a time zone where said another handheld electronic device is disposed.

Optionally, said mode of communication is selected from the group consisting of e-mail, instant messaging, and a voice call.

Optionally, a portion of said determining a form of communication further comprises recommending a form of communication.

## Claims

1. A method for determining a form of communication comprising:
receiving at an electronic device status information indicative of a current geographical status, a current temporal status, or both; and
responsive to receiving the status information, determining at the electronic device a form of communication based on the status.

2. The method of claim 1 wherein the status information is received from a handheld electronic device via a network.

3. The method of claim 2 wherein the form of communication is used for subsequent communication between the electronic device and the handheld electronic device.

4. The method according to claim 1, further comprising determining the status of the handheld electronic device, the status being a geographic location of the handheld electronic device.

5. The method according to claim 1, further comprising determining the status of the handheld electronic device, the status being a time zone where the handheld electronic device is disposed.

6. The method according to claim 1, further comprising determining as the form of communication a form of communication selected from the group consisting of e-mail, instant messaging, and a voice call.

7. The method according to claim 1, wherein the electronic device is another handheld electronic device.

8. The method according to claim 3, further comprising responsive to receiving the status information from the network, displaying the status on the electronic device.

9. The method according to claim 7, further comprising selecting the handheld electronic device from a contact list stored on the another handheld electronic device, and responsive to the selecting, transmitting a request to the network to initiate the transmitting of the status of the handheld electronic device to the network.

10. The method according to claim 7, further comprising responsive to receiving the status from the network, performing an updating operation on the another electronic device.

11. The method according to claim 7, wherein the status information is encrypted, and further comprising decrypting the status information prior to the displaying.

12. The method according to claim 7, further comprising determining whether the another handheld electronic device is authorized to receive the status prior to transmission of the status.

13. The method according to claim 1, wherein the network comprises one or more wireless Access Points, and further comprising transmitting a portion of the status information from the handheld electronic device to the network via the one or more Access Points.

14. The method according to claim 1, wherein the network comprises one or more wireless Access Points, and further comprising transmitting a portion as the status information from the network to the another electronic device via the one or more Access Points.

15. The method according to claim 1, wherein a portion of the determining a form of communication further comprises recommending a form of communication.
